# EUROPEAN PATENT SPECIFICATION

(11) **EP 3 358 137 B1**
(45) Date of publication and mention of the grant of the patent: **04.12.2019**
(21) Application number: 18155217.5
(22) Date of filing: 06.02.2018
(51) Int. Cl.: F01D 9/04, F01D 11/24, F01D 25/12, F01D 25/24

(54) **GAS TURBINE RING SEGMENT HAVING STRAIGHT COOLING HOLES AND GAS TURBINE INCLUDING THE SAME**
GASTURBINENRINGSEGMENT MIT GERADEN KÜHLLÖCHERN UND GASTURBINE DAMIT
SEGMENT D'ANNEAU DE TURBINE À GAZ PRÉSENTANT DES TROUS DE REFROIDISSEMENT RECTILIGNES ET TURBINE À GAZ LE COMPRENANT

(30) Priority: 06.02.2017 KR 20170016345
(43) Date of publication of application: 08.08.2018
(73) Proprietor: Doosan Heavy Industries & Construction Co., Ltd., Seongsan-gu Changwon-si, Gyeongsangnam-do 51711 (KR)
(72) Inventor: Kim, Kibaek, 51318 Gyeongsangnam-do (KR); Lee, Changyong, 30130 Sejong-si (KR)
(74) Representative: Ter Meer Steinmeister & Partner

(56) References cited:
- US-A- 5 071 313
- US-A1- 2004 047 725
- US-A1- 2011 044 805
- US-A1- 2011 182 724
- US-A1- 2013 108 419

## Description

### BACKGROUND

### Field

The present disclosure relates generally to a gas turbine ring segment having straight cooling holes and a gas turbine including the same. More particularly, the present disclosure relates to a gas turbine ring segment having straight-structure cooling holes communicating with a main cavity formed in a central portion in the axial direction and a gas turbine including the same.

### Description of the Related Art

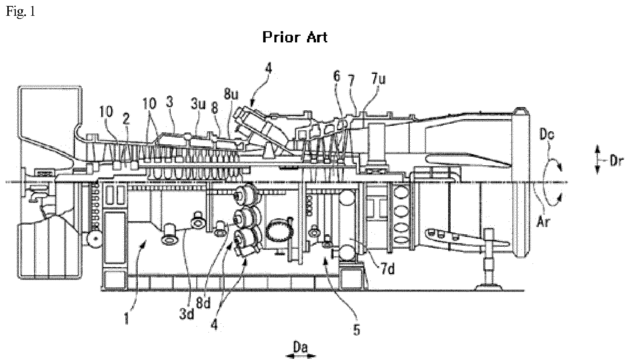

Generally, as illustrated in FIG. 1, a gas turbine includes a rotor rotating about an axis, a housing containing the rotor to be rotatable, and a stationary wing ring disposed on the inner circumferential portion of the housing to be annular about the axis.

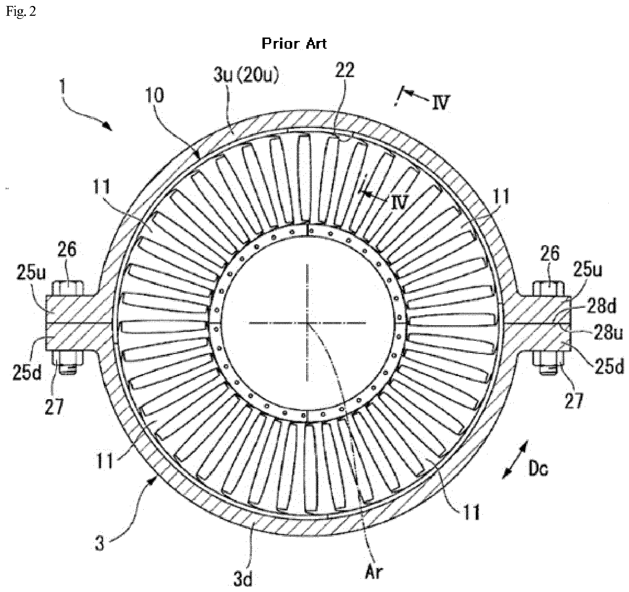

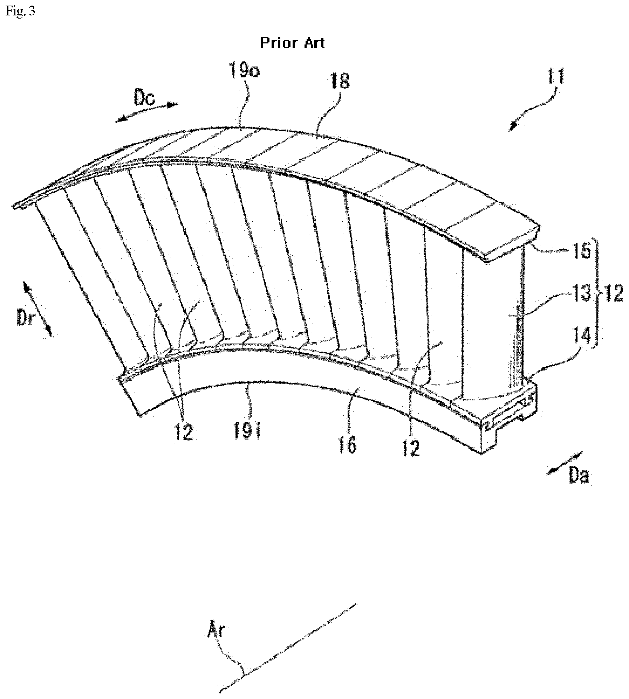

As illustrated in FIG. 2, in an axial compressor 1 disposed in the gas turbine, a housing is comprised of an upper housing 25u and a lower housing 25d, which are dividable in terms of assemblability or the like. In addition, as illustrated in FIG. 3, a stationary wing ring 11 can also be comprised of a plurality of ring segments, which are divided in the circumferential direction.

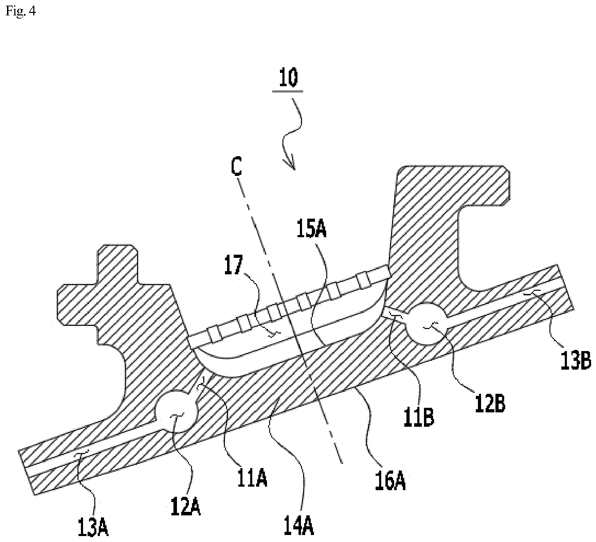

FIG. 4 illustrates a gas turbine ring segment 10 according to the related art. The gas turbine ring segment 10 according to the related art has a plurality of cooling holes 11A and 11B, 12A and 12B, and 13A and 13B, which are formed at different locations and extend at different angles.

Refrigerant flows through the cooling holes 11A and 11B, 12A and 12B, and 13A and 13B to perform cooling. Here, cooling efficiency may be controlled by regulating the flow rate of refrigerant flowing through the cooling holes 11A and 11B, 12A and 12B, and 13A and 13B.

However, the cooling holes 11A and 11B, 12A and 12B, and 13A and 13B of the gas turbine ring segment 10 according to the related art have different structures.

The first cooling holes 11A and 11B communicating with a main cavity 17 and the third cooling holes 13A and 13B communicating with the outside are connected via the second cooling holes 12A and 12B located therebetween.

To machine the cooling holes 11A and 11B, 12A and 12B, and 13A and 13B having this structure, a ceramic core must be added, and different machining processes are necessary.

In addition, the cooling holes 11A and 11B, 12A and 12B, and 13A and 13B having this structure must be machined very precisely.

Thus, in the gas turbine ring segment 10 according to the related art, a significant amount of time and high machining costs are used to machine the cooling holes 11A and 11B, 12A and 12B, and 13A and 13B, which are problematic.

Specifically, as illustrated in FIG. 1, an impingement target wall 14A having an impingement target surface 15A formed on one side and a hot side surface 16A formed on the other side is relatively thick, thereby reducing the cooling effect, which is problematic. US 2004/047725 A1 and US 2013/108419 A1 disclose ring segments of a gas turbine having cooling passages with a straight structure that extend from an inner main cavity of the ring segment to an outside of the ring segment for flow of cooling fluid. US 2011/182724 A1 and US 2011/044805 A1 disclose a cooling system of a ring segment for a gas turbine. The cooling system includes passages that connect an inner main cavity of the ring segment to another cavity within the ring segment body which in turn is connected to an outside of the ring segment via other cooling passages.

Accordingly, a technology for a gas turbine ring segment including a structure able to overcome the above-described problem of the related art is demanded.

### SUMMARY

In order to achieve the above object, there is provided a gas turbine ring segment for a gas turbine according to claim 1.

According to an embodiment of the system, a thickness of the impingement target wall may range from 30% to 50% of a thickness of a gas turbine ring segment body.

According to an embodiment of the system, a distance to the hot side surface from a central axis of the cooling holes may be within a range between a thickness of the impingement target wall and a thickness of a gas turbine ring segment body.

In addition, the distance to the hot side surface from the central axis of the cooling holes may range 60% to 80% of the thickness of the gas turbine ring segment body.

According to an embodiment of the system, the gas turbine ring segment may further include a reinforcing portion disposed on an inner surface of the main cavity and supporting the impingement target surface in the axial direction.

In this embodiment, a height of the reinforcing portion may range from 100% to 200% of a thickness of a gas turbine ring segment body.

In addition, the reinforcing portion may be two or more reinforcing portions disposed on the inner surface of the main cavity to be spaced apart from each other at predetermined distances.

In addition, a round structure having a predetermined length and radius may be provided on a contiguous portion in which the reinforcing portion is contiguous to the inner surface of the main cavity.

According to an embodiment of the system, each of the cooling holes may include different-diameter cooling holes communicating with each other.

According to an aspect of the system, there is provided a gas turbine including the gas turbine ring segment.

As set forth above, the gas turbine ring segment according to the system has the cooling holes having a straight structure, communicating with the main cavity formed in the central portion in the axial direction. This configuration can consequently omit the structure comprised of a plurality of cooling holes, which has been necessary in the related art, such that the ceramic core that has been necessarily used during machining is unnecessary. It is thereby possible to significantly reduce machining time and costs.

In addition, in the gas turbine ring segment according to the system, it is possible to form the cooling holes having a straight structure in reliable locations, in which cooling efficiency can be maintained, by limiting the thickness of the impingement target wall to a specific range and limiting the position of the central axis a of the cooling holes to a specific range.

Furthermore, the gas turbine ring segment according to the system is provided with the reinforcing portion having a structure disposed on the inner surface of the main cavity and supporting the impingement target surface in the axial direction. This configuration can enhance the structural stability of the impingement target wall, the thickness of which is reduced to form the cooling holes having a straight structure in specific locations. Consequently, the structural stability of the gas turbine ring segment can be further enhanced.

In addition, in the gas turbine ring segment according to the system, the height of the reinforcing portion, disposed to the inner surface of the main cavity and supporting the impingement target surface in the axial direction, is within a specific range in an embodiment. This configuration can enhance the structural stability of the impingement target wall, the thickness of which is reduced to form the cooling holes having a straight structure in specific locations. Consequently, the structural stability of the gas turbine ring segment can be further enhanced.

Furthermore, in the gas turbine ring segment according to the system, the round structure having a predetermined length and radius is formed on a contiguous portion, in which the reinforcing portion is disposed to the main cavity. This configuration can enhance the structural stability of the impingement target wall, the thickness of which is reduced to form the cooling holes having a straight structure in specific locations. Consequently, the structural stability of the gas turbine ring segment can be further enhanced.

In addition, in the gas turbine ring segment according to the system, each of the cooling holes is comprised of the cooling hole portions having different inner diameters and being connected to each other. It is therefore possible to control the flow rate of refrigerant flowing through the cooling holes while maximizing heat transfer efficiency.

In addition, the gas turbine according to the system includes the gas turbine ring segment having a specific structure. It is therefore possible to significantly reduce machining time and costs.

### BRIEF DESCRIPTION OF THE DRAWINGS

The above and other objects, features and other advantages of the present disclosure will be more clearly understood from the following detailed description when taken in conjunction with the accompanying drawings, in which:
FIG. 1 is a cross-sectional view illustrating a gas turbine according to the related art;
FIG. 2 is a cross-sectional view illustrating the compressor part of the gas turbine illustrated in FIG. 1;
FIG. 3 is an enlarged view of the ring segment illustrated in FIG. 2;
FIG. 4 is a cross-sectional view illustrating a gas turbine ring segment according to the related art;
FIG. 5 is a cross-sectional view illustrating a ring segment according to an embodiment of the system;
FIG. 6 is an enlarged view of part A in FIG. 5;
FIG. 7 is an enlarged view of a part A of a ring segment according to another embodiment, corresponding to part A in FIG 5; and
FIG. 8 is a perspective view illustrating ring segments according to an embodiment of the system.

### DETAILED DESCRIPTION

Hereinafter, exemplary embodiments of the system will be described in detail. Before that, it will be understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

Throughout the specification, it will be understood that when an element is referred to as being located "on" another element, not only can it be directly formed on another element, but it can also be indirectly formed on another element via an intervening element. In addition, it will be understood that the terms "comprise", "include", "have" and any variations thereof used herein are intended to cover non-exclusive inclusions unless explicitly described to the contrary.

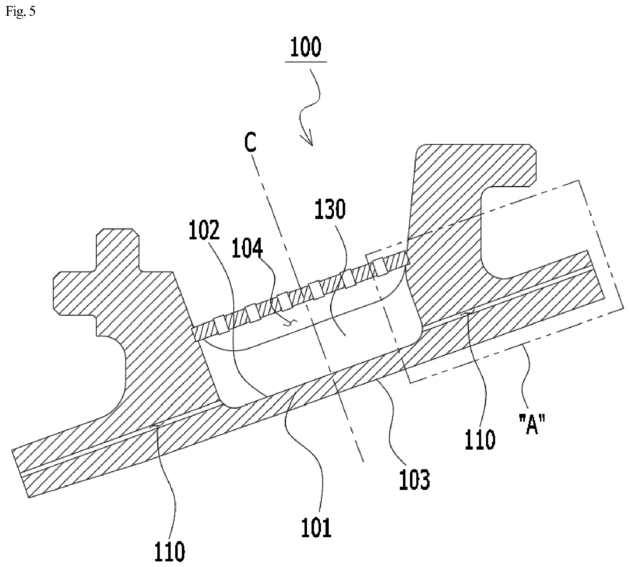

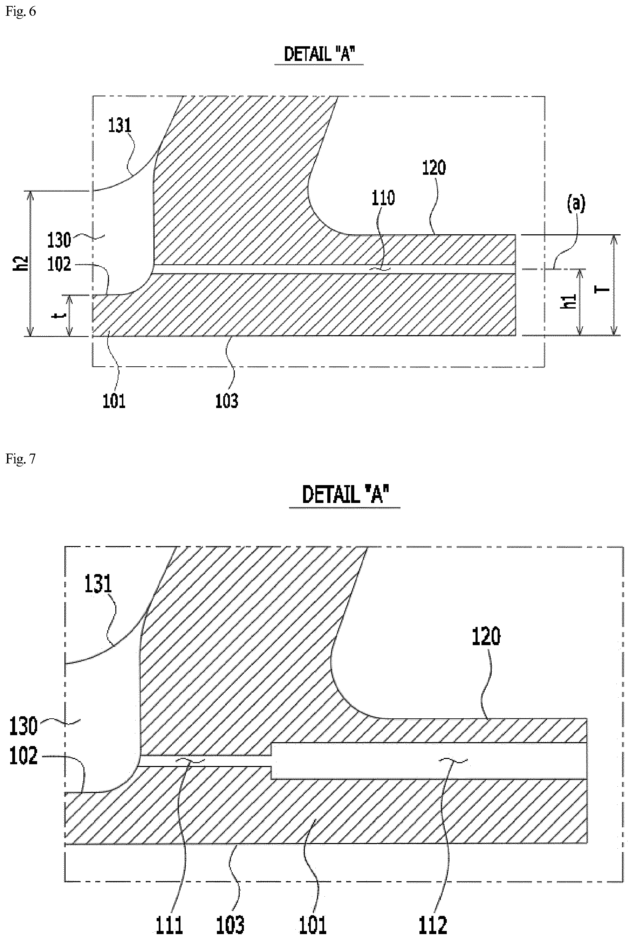

FIG. 5 is a cross-sectional view illustrating a ring segment according to an embodiment of the system, and FIG. 6 is an enlarged view of part A in FIG. 5.

Referring to FIGS. 5 and 6, the gas turbine ring segment 100 according to the present embodiment includes an impingement target wall 101 having an impingement target surface 102 formed in one side, in the direction of a main cavity 104, and a hot side surface 103 formed on the other side, in which the main cavity 104 is formed in the central portion in the axial direction.

In the gas turbine ring segment 100 according to the present embodiment, cooling holes 110 allowing the inside to communicate with the outside are formed along the outer circumferential surface at predetermined distances from each other. Each of the cooling holes 110 has a straight structure connected to the main cavity 104 formed in the central portion in the axial direction.

Thus, since the gas turbine ring segment 100 according to the present embodiment is provided with the cooling holes having a specific structure, the related-art structure comprised of a plurality of cooling holes can be omitted, and the ceramic core used in the machining process is unnecessary. It is therefore possible to significantly reduce machining time and costs.

Hereinafter, components of the gas turbine ring segment 100 according to the present embodiment will be described in detail with reference to the drawings.

As illustrated in FIGS. 5 and 6, the impingement target wall of the gas turbine ring segment 100 according to the present embodiment is formed to be thinner than that of the related art (e.g. impingement target wall 14A of Fig. 3). The use of this configuration makes it possible to form the cooling holes 110 having a straight structure.

Specifically, the thickness t of the impingement target wall 101 is not limited to a specific value as long as the inner main cavity 104 can communicate with the outside via the cooling holes 110 having a straight structure. The thickness t of the impingement target wall 101 may be in the range of 30% to 50% of the thickness T of a body 120 of the gas turbine ring segment 100 in an embodiment of the system.

When the thickness t of the impingement target wall 101 is set to be less than 30% of the thickness T of the gas turbine ring segment body 120, the impingement target wall 101 may be too thin to provide structural stability, which may be undesirable.

In contrast, when the thickness t of the impingement target wall 101 is set to be greater than 50% of the thickness T of the gas turbine ring segment body 120, areas in which the cooling holes 110 are supposed to be formed are reduced, which may also be undesirable.

Here, the distance h1 to the hot side surface 103 from the central axis a of the cooling holes 110 may be set to be within the range between the thickness t of the impingement target wall 101 and the thickness T of the gas turbine ring segment body 120, as illustrated in FIG. 6.

More specifically, the distance h1 to the hot side surface 103 from the central axis a of the cooling holes 110 may be in the range of 60% to 80% of the thickness T of the gas turbine ring segment body 120 in an embodiment.

When the distance h1 to the hot side surface 103 from the central axis a of the cooling holes 110 is set to be less than 60% of the thickness T of the gas turbine ring segment body 120, the distance between the cooling holes 110 and the impingement target surface 102 is reduced. Consequently, cooling efficiency may be lowered, which may be undesirable.

In contrast, when the distance h1 to the hot side surface 103 from the central axis a of the cooling holes 110 is set to be greater than 80% of the thickness T of the gas turbine ring segment body 120, the cooling holes 110 may be upwardly located. Consequently, cooling efficiency may be lowered, which may be undesirable.

As described above, in the gas turbine ring segment 100 according to the present embodiment, the impingement target wall 101 is formed to be thinner than the impingement target wall of the related art, such that the cooling holes 110 having a straight structure can be formed. To enhance structural stability, a reinforcing portion 130 may be added, as illustrated in FIG. 6.

Specifically, as illustrated in FIG. 6, the reinforcing portion 130 may be a structure disposed on the inner surface of the main cavity 104 and supporting the impingement target surface 102 in the axial direction.

Here, the height h2 of the reinforcing portion 130 may be in the range of 100% to 200% of the thickness T of the gas turbine ring segment body 120 in an embodiment.

In some cases, the height h2 of the reinforcing portion 130 may be suitably changed as intended by the designer.

Specifically, when the height h2 of the reinforcing portion 130 is set to be less than 100% of the thickness T of the gas turbine ring segment body 120, structural stability may not be sufficiently provided, which may be undesirable.

In contrast, when the height h2 of the reinforcing portion 130 is set to be greater than 200% of the thickness T of the gas turbine ring segment body 120, structural stability can be sufficiently provided. However, the reinforcing portion 130 may interfere with the other components, which may be undesirable.

In some cases, a round structure 131 a predetermined length and radius may be formed on a contiguous portion, in which the reinforcing portion 130 is contiguous to the main cavity 104, to further enhance structural stability.

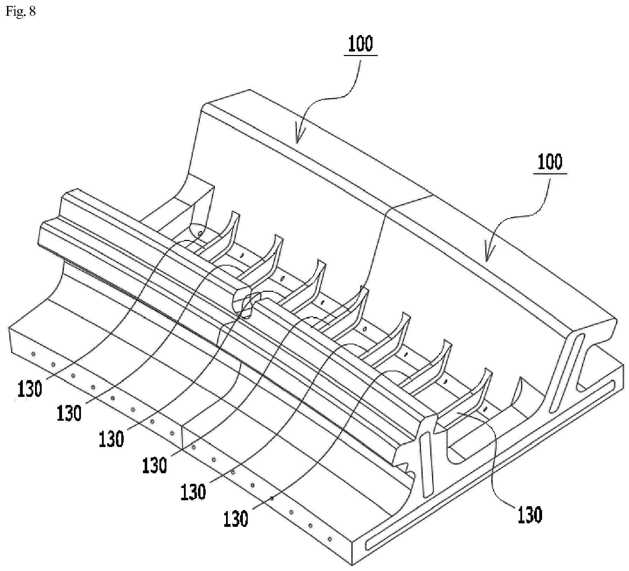

In some cases, as illustrated in FIG. 8, two or more reinforcing portions 130 may be disposed on the inner surface of the main cavity 104 to be spaced apart from each other at predetermined distances in the circumferential direction.

In this case, structural stability can be further enhanced.

FIG. 7 is an enlarged view of a part A of a ring segment according to another embodiment, corresponding to part A in FIG 5.

Each of the cooling holes 110 of the gas turbine ring segment 100 according to the present embodiment may be configured such that cooling holes 111 and 112 having different inner diameters communicate with each other.

In this case, it is possible to control the flow rate of refrigerant using the cooling hole 111 having a smaller inner diameter and to improve heat transfer efficiency using the cooling hole 112 having a greater inner diameter.

Specifically, the interior of the cooling hole 112 having a greater inner diameter has a wider surface area than the interior of the cooling hole 111 having a smaller inner diameter. Consequently, the cooling hole 112 having a greater inner diameter can improve cooling efficiency. Uneven structures may be additionally provided on the inner surface of the cooling hole 112 having a greater inner diameter to further improve cooling efficiency.

As set forth above, the gas turbine ring segment 100 according to the system has the cooling holes 110 having a straight structure, communicating with the main cavity 104 formed in the central portion in the axial direction. This configuration can consequently omit the structure comprised of a plurality of cooling holes (11A and 11B, 12A and 12B, and 13A and 13B in FIG. 4), which has been necessary in the related art, such that the ceramic core that has been necessarily used during machining is unnecessary. It is thereby possible to significantly reduce machining time and costs.

In addition, in the gas turbine ring segment 100 according to the system, it is possible to form the cooling holes 110 having a straight structure in reliable locations, in which cooling efficiency can be maintained, by limiting the thickness of the impingement target wall 101 to a specific range and limiting the position of the central axis a of the cooling holes 110 to a specific range.

Furthermore, the gas turbine ring segment 100 according to the system is provided with the reinforcing portion 130 having a structure disposed on the inner surface of the main cavity 104 and supporting the impingement target surface 102 in the axial direction. This configuration can enhance the structural stability of the impingement target wall 101, the thickness of which is reduced to form the cooling holes 110 having a straight structure in specific locations. Consequently, the structural stability of the gas turbine ring segment 100 can be further enhanced.

In addition, in the gas turbine ring segment 100 according to the system, the height of the reinforcing portion 130, disposed on the inner surface of the main cavity 104 and supporting the impingement target surface 102 in the axial direction, is limited to a specific range in an embodiment. This configuration can enhance the structural stability of the impingement target wall 101, the thickness of which is reduced to form the cooling holes 110 having a straight structure in specific locations. Consequently, the structural stability of the gas turbine ring segment 100 can be further enhanced.

Furthermore, in the gas turbine ring segment 100 according to the system, the round structure 131 having a predetermined length and radius is formed on a contiguous portion, in which the reinforcing portion 130 is connected to the main cavity 104. This configuration can enhance the structural stability of the impingement target wall 101, the thickness of which is reduced to form the cooling holes 110 having a straight structure in specific locations. Consequently, the structural stability of the gas turbine ring segment 100 can be further enhanced.

In addition, in the gas turbine ring segment 100 according to the system, each of the cooling holes 110 is comprised of the cooling holes 111 and 112 having different inner diameters and being connected to each other. It is therefore possible to control the flow rate of refrigerant flowing through the cooling holes 110 while maximizing heat transfer efficiency.

In addition, a gas turbine according to the system includes the gas turbine ring segment 100 having a specific structure. It is therefore possible to significantly reduce machining time and costs.

In the foregoing detailed description, the system has been described with respect to the specific embodiments thereof. It should be understood, however, that the system is by no means limited to the above-stated specific forms but shall include all variations, equivalents, and substitutes falling within the spirit and scope of the system defined by the appended Claims.

It should be understood that the system should not be limited to the foregoing specific embodiments or description. Rather, a variety of modifications are possible to a person skilled in the art without departing from the concept of the system and such modifications fall within the scope of the claims.

## Claims

1. A gas turbine ring segment (100) for a gas turbine,
the gas turbine ring segment comprising an impingement target wall (101) having an impingement target surface (102) formed in one side, in a direction of a main cavity (104), and a hot side surface (103) formed on the other side, in which the main cavity (104) is located in a central portion in an axial direction,
wherein cooling holes (110) allowing an inside to communicate with an outside are arranged along the outer circumferential surface at predetermined distances from each other, each of the cooling holes having a straight structure communicating with the main cavity (104) located in the central portion in the axial direction, wherein the straight structure of the cooling holes (110) extends from the main cavity (104) to the outside,
**characterized in that** each of the cooling holes (110) comprises a first cooling hole (111) and a second cooling hole (112), wherein the first and the second cooling holes (111, 112) communicate with each other and wherein the first and the second cooling holes (111, 112) have different inner diameters.

2. The gas turbine ring segment according to claim 1, wherein the gas turbine ring segment further comprises a reinforcing portion (130) disposed on an inner surface of the main cavity (104) and supporting the impingement target surface (102) in the axial direction.

3. The gas turbine ring segment according to claim 2, wherein a height (h2) of the reinforcing portion (130) ranges from 100% to 200% of a thickness (T) of a gas turbine ring segment body (120).

4. The gas turbine ring segment according to claim 2 or 3, wherein the reinforcing portion (130) comprising two or more reinforcing portions disposed on the inner surface of the main cavity (104) to be spaced apart from each other at predetermined distances.

5. The gas turbine ring segment according to claim 2, 3, or 4, wherein a round structure (131) having a predetermined length and radius is provided on a contiguous portion in which the reinforcing portion (130) is contiguous to the inner surface of the main cavity (104).

6. The gas turbine ring segment according to claim 1 or 2, wherein a thickness (t) of the impingement target wall (101) ranges from 30% to 50% of a thickness (T) of a gas turbine ring segment body (120).

7. The gas turbine ring segment according to any one of the preceding claims, wherein a distance to the hot side surface (103) from a central axis (a) of the cooling holes (110) is within a range between a thickness (t) of the impingement target wall (101) and a thickness (T) of a gas turbine ring segment body (120).

8. The gas turbine ring segment according to any one of the preceding claims, wherein the distance (h1) to the hot side surface (103) from the central axis (a) of the cooling holes (110) ranges 60% to 80% of the thickness of the gas turbine ring segment body.

9. The gas turbine ring segment according to claim 1, wherein the first cooling hole (111) communicates with the main cavity (104) and is disposed between the main cavity (104) and the second cooling hole (112), wherein the second cooling hole (112) communicates with the outside, and wherein inner diameter of the first cooling hole (111) is smaller than inner diameter of the second cooling hole (112).

10. The gas turbine ring segment according to claim 9, wherein an inner surface of the second cooling hole (112) comprises uneven structures.

11. A gas turbine comprising:
a rotor for rotating about an axis,
a housing comprising the rotor,
a stationary wing ring disposed on an inner circumferential portion of the housing to be annular about the axis, and
a plurality of the gas turbine ring segments as claimed in any one of the preceding claims, the gas turbine ring segments being disposed on the gas turbine to be dividable in a circumferential direction.

## Patentansprüche

1. Gasturbinen-Ringsegment (100) für eine Gasturbine,
wobei das Gasturbinen-Ringsegment eine Aufprallzielwand (101) mit einer Aufprallzielfläche (102), die auf der einen Seite in Richtung eines Haupthohlraums (104) ausgebildet ist, und eine auf der anderen Seite ausgebildete heiße Seitenfläche (103) umfasst, wobei sich der Haupthohlraum (104) in axialer Richtung in einem zentralen Abschnitt befindet,
wobei Kühllöcher (110), die es einer Innenseite ermöglichen, mit einer Außenseite in vorbestimmten Abständen voneinander zu kommunizieren, entlang der äußeren Umfangsfläche angeordnet sind, wobei jedes der Kühllöcher eine gerade Struktur aufweist, die mit dem Haupthohlraum (104) in Verbindung steht, der sich im Mittelabschnitt in axialer Richtung befindet, wobei sich die gerade Struktur der Kühllöcher (110) vom Haupthohlraum (104) nach außen erstreckt,
**dadurch gekennzeichnet, dass** jedes der Kühllöcher (110) ein erstes Kühlloch (111) und ein zweites Kühlloch (112) umfasst, wobei das erste und das zweite Kühlloch (111, 112) kommunizieren und wobei das erste und das zweite Kühlloch (111, 112) unterschiedliche Innendurchmesser aufweisen.

2. Gasturbinenringsegment nach Anspruch 1, wobei das Gasturbinenringsegment ferner einen Verstärkungsabschnitt (130) umfasst, der auf einer Innenfläche des Haupthohlraums (104) angeordnet ist und die Aufprallzielfläche (102) in axialer Richtung stützt.

3. Gasturbinen-Ringsegment nach Anspruch 2, wobei eine Höhe (h2) des Verstärkungsabschnitts (130) zwischen 100 % bis 200 % einer Dicke (T) eines Gasturbinen Ring-Segmentkörpers (120) liegt.

4. Gasturbinen-Ringsegment nach Anspruch 2 oder 3,
wobei der Verstärkungsabschnitt (130) zwei oder mehr Verstärkungsabschnitte umfasst, die auf der Innenfläche der Hauptfläche des Haupthohlraums (104) angeordnet sind,
und in vorbestimmten Abständen voneinander beabstandet sind.

5. Gasturbinen-Ringsegment nach Anspruch 2, 3 oder 4, wobei eine runde Struktur (131) mit einer vorbestimmten Länge und einem vorbestimmten Radius auf einem angrenzenden Abschnitt vorgesehen ist, in dem der Verstärkungsabschnitt (130) an die Innenfläche des Haupthohlraums (104) angrenzt.

6. Gasturbinenringsegment nach Anspruch 1 oder 2, wobei eine Dicke (t) der Aufprallzielwand (101) im Bereich von 30 % bis 50 % einer Dicke (T) eines Gasturbinenring-Segmentkörpers (120) liegt.

7. Gasturbinen-Ringsegment nach einem der vorhergehenden Ansprüche, wobei ein Abstand zur heißen Seitenfläche (103) von einer Mittelachse (a) der Kühlbohrungen (110) innerhalb eines Bereichs zwischen einer Dicke (t) der Aufprallzielwand (101) und einer Dicke (T) eines Gasturbinenring-Segmentkörpers (120) liegt.

8. Gasturbinenringsegment nach einem der vorhergehenden Ansprüche, wobei der Abstand (h1) zur heißen Seitenfläche (103) von der Mittelachse (a) der Kühlbohrungen (110) 60 % bis 80 % der Dicke des Gasturbinenring-Segmentkörpers beträgt.

9. Gasturbinen-Ringsegment nach Anspruch 1, wobei das erste Kühlloch (111) mit dem Hauptraum (104) in Verbindung steht und zwischen dem Hauptraum (104) und dem zweiten Kühlloch (112) angeordnet ist, wobei das zweite Kühlloch (112) mit dem Außenbereich in Verbindung steht und wobei der Innendurchmesser des ersten Kühllochs (111) kleiner ist als der Innendurchmesser des zweiten Kühllochs (112).

10. Gasturbinen-Ringsegment nach Anspruch 9, wobei eine Innenfläche des zweiten Kühllochs (112) unebene Strukturen aufweist.

11. Gasturbine, umfassend:
einen Rotor zum Drehen um eine Achse,
ein Gehäuse, das den Rotor umfasst,
einen stationären Flügelring, der an einem inneren Umfangsabschnitt des Gehäuses angeordnet ist, um ringförmig um die Achse sein, und
eine Vielzahl der Gasturbinenringsegmente, wie sie in einem der vorhergehenden Ansprüche beansprucht werden, wobei die Gasturbinenringsegmente an der Gasturbine angeordnet sind, um in Umfangsrichtung teilbar zu sein.

## Revendications

1. Segment de bague de turbine à gaz (100) pour une turbine à gaz,
le segment de bague de turbine à gaz comprenant une paroi cible d'impact (101) ayant une surface cible d'impact (102) formée sur un côté, dans une direction d'une cavité principale (104), et une surface côté chaud (103) formée sur l'autre côté, la cavité principale (104) étant située dans une partie centrale dans une direction axiale,
des trous de refroidissement (110) permettant à un intérieur de communiquer avec un extérieur étant disposés le long de la surface circonférentielle externe à des distances prédéterminées les uns des autres, chacun des trous de refroidissement ayant une structure rectiligne communiquant avec la cavité principale (104) située dans la partie centrale dans la direction axiale, la structure rectiligne des trous de refroidissement (110) s'étendant de la cavité principale (104) à l'extérieur,
**caractérisé par le fait que** chacun des trous de refroidissement (110) comprend un premier trou de refroidissement (111) et un second trou de refroidissement (112), les premier et second trous de refroidissement (111, 112) communiquant l'un avec l'autre, et les premier et second trous de refroidissement (111, 112) ayant des diamètres internes différents.

2. Segment de bague de turbine à gaz selon la revendication 1, le segment de bague de turbine à gaz comprenant en outre une partie de renforcement (130) disposée sur une surface interne de la cavité principale (104) et supportant la surface cible d'impact (102) dans la direction axiale.

3. Segment de bague de turbine à gaz selon la revendication 2, dans lequel une hauteur (h2) de la partie de renforcement (130) est comprise dans la plage allant de 100 % à 200 % d'une épaisseur (T) d'un corps de segment de bague de turbine à gaz (120).

4. Segment de bague de turbine à gaz selon la revendication 2 ou 3, dans lequel la partie de renforcement (130) comprend au moins deux parties de renforcement disposées sur la surface interne de la cavité principale (104) pour être espacées l'une de l'autre à des distances prédéterminées.

5. Segment de bague de turbine à gaz selon la revendication 2, 3 ou 4, dans lequel une structure ronde (131) ayant des longueur et rayon prédéterminés est prévue sur une partie contiguë dans laquelle la partie de renforcement (130) est contiguë à la surface interne de la cavité principale (104).

6. Segment de bague de turbine à gaz selon la revendication 1 ou 2, dans lequel une épaisseur (t) de la paroi cible d'impact (101) est comprise dans la plage allant de 30 % à 50 % d'une épaisseur (T) d'un corps de segment de bague de turbine à gaz (120).

7. Segment de bague de turbine à gaz selon l'une quelconque des revendications précédentes, dans lequel une distance de la surface côté chaud (103) à un axe central (a) des trous de refroidissement (110) est comprise dans une plage entre une épaisseur (t) de la paroi cible d'impact (101) et une épaisseur (T) d'un corps de segment de bague de turbine à gaz (120).

8. Segment de bague de turbine à gaz selon l'une quelconque des revendications précédentes, dans lequel la distance (h1) à la surface côté chaud (103) à partir de l'axe principal (a) des trous de refroidissement (110) est comprise dans la plage allant de 60 % à 80 % de l'épaisseur du corps de segment de bague de turbine à gaz.

9. Segment de bague de turbine à gaz selon la revendication 1, dans lequel le premier trou de refroidissement (111) communique avec la cavité principale (104) et est disposé entre la cavité principale (104) et le second trou de refroidissement (112), le second trou de refroidissement (112) communiquant avec l'extérieur, et un diamètre interne du premier trou de refroidissement (111) étant plus petit qu'un diamètre interne du second trou de refroidissement (112).

10. Segment de bague de turbine à gaz selon la revendication 9, dans lequel une surface interne du second trou de refroidissement (112) comprend des structures irrégulières.

11. Turbine à gaz comprenant :
un rotor destiné à tourner autour d'un axe,
un carter comprenant le rotor,
une bague à ailettes fixes disposée sur une partie circonférentielle interne du carter pour être annulaire autour de l'axe, et
une pluralité de segments de bague de turbine à gaz selon l'une quelconque des revendications précédentes, les segments de bague de turbine à gaz étant disposés sur la turbine à gaz pour être aptes à être divisés dans une direction circonférentielle.
